(19) Europäisches Patentamt
European Patent Office
Office européen des brevets

(11) **EP 1 330 110 B1**

(12) **FASCICULE DE BREVET EUROPEEN**

(45) Date de publication et mention
de la délivrance du brevet:
**01.07.2015 Bulletin 2015/27**

(51) Int Cl.:
***G06T 1/00*** *(2006.01)*    ***H04N 1/32*** *(2006.01)*

(21) Numéro de dépôt: **03000407.1**

(22) Date de dépôt: **10.01.2003**

(54) **Procédé et système de décodage de tatouage**

Dekodierverfahren und -system für Wasserzeichen

Method and system for watermark decoding

(84) Etats contractants désignés:
**AT BE BG CH CY CZ DE DK EE ES FI FR GB GR HU IE IT LI LU MC NL PT SE SI SK TR**

(30) Priorité: **11.01.2002 FR 0200615**

(43) Date de publication de la demande:
**23.07.2003 Bulletin 2003/30**

(73) Titulaire: **Thomson Software & Technology Solutions**
**92100 Boulogne-Billancourt (FR)**

(72) Inventeurs:
• **Baudry, Séverine**
**94117 Arcueil Cedex (FR)**
• **N'Guyen, Philippe**
**94117 Arcueil Cedex (FR)**

(74) Mandataire: **Huchet, Anne et al**
**Technicolor**
**1, rue Jeanne d'Arc**
**92443 Issy-les-Moulineaux Cedex (FR)**

(56) Documents cités:
EP-A- 0 981 113    EP-A- 1 156 660
WO-A-01/24113     WO-A-01/59689

FR-A- 2 792 797     US-A1- 2001 016 051
US-A1- 2001 017 931

• PEREIRA S ET AL: "An iterative template matching algorithm using the Chirp-Z transform for digital image watermarking" PATTERN RECOGNITION, PERGAMON PRESS INC. ELMSFORD, N.Y, US, vol. 33, no. 1, janvier 2000 (2000-01), pages 173-175, XP004243922 ISSN: 0031-3203
• VOLOSHYNOVSKIY S ; DEGUILLAUME F ; PUN T: "Multibit digital watermarking robust against local nonlinear geometrical distortions" PROCEEDINGS 2001 INTERNATIONAL CONFERENCE ON IMAGE PROCESSING, vol. 3, 7 - 10 octobre 2001, pages 999-1002, XP002213837 Thessaloniki (Greece)
• RUANAIDH J J K O ET AL: "Rotation, scale and translation invariant spread spectrum digital image watermarking" SIGNAL PROCESSING. EUROPEAN JOURNAL DEVOTED TO THE METHODS AND APPLICATIONS OF SIGNAL PROCESSING, ELSEVIER SCIENCE PUBLISHERS B.V. AMSTERDAM, NL, vol. 66, no. 3, 28 mai 1998 (1998-05-28), pages 303-317, XP004124954 ISSN: 0165-1684
• BAS P ET AL: "ROBUST WATERMARKING BASED ON THE WARPING OF PRE-DEFINED TRIANGULAR PATTERNS" PROCEEDINGS OF THE SPIE, SPIE, BELLINGHAM, VA, US, vol. 3971, 24 janvier 2000 (2000-01-24), pages 99-109, XP000981899

EP 1 330 110 B1

**Description**

L'invention concerne un procédé et un système permettant notamment d'estimer les transformations géométriques inconnues survenues sur des données, par exemple une image, une séquence audio ou une vidéo.

Elle trouve son application pour corriger les déformations survenues lors de la transmission d'images et/ou pour obtenir des informations sur le tatouage porteur de message.

L'invention est utilisée par exemple en Watermarking. En effet, une transformation géométrique sur une image rend la plupart du temps le tatouage illisible. En tatouant un motif de référence dans l'image il est ainsi possible d'estimer, dans un lecteur de tatouage par exemple, la transformation géométrique survenue, puis de l'inverser avant d'effectuer le décodage du tatouage porteur de message.

En tatouage, la résistance aux transformations géométriques est un problème crucial. La détection du tatouage est souvent rendue impossible lorsque l'image reçue est déformée par rapport à l'image originale.

Des modifications de la géométrie de l'image surviennent en effet fréquemment lors de la diffusion ou de l'exploitation de l'oeuvre. C'est le cas notamment des découpages ou des changements d'échelle qui peuvent être liés aux changements de format.

Le document EP 0 981 113 décrit un procédé de détermination de paramètres de rotation et de mise à l'échelle à partir d'un document scanné.

Les conversions analogique/numérique et numérique/analogique peuvent introduire une déformation sur l'image ou un « jitter » de ligne sur la vidéo.

Il existe aussi des attaques malveillantes très efficaces, par exemple l'attaque Stirmark décrite en 1988 par F.Petitcolas et al dans la référence intitulée « Attacks on copyright marking systems » Proceedings of 2nd Information Hiding Workshop visant à empêcher une détection correcte du tatouage.

Différentes méthodes visant à contrer l'effet néfaste des modifications géométriques ont donc été développées. Elles sont classées en cinq catégories :

**1) Le tatouage d'un motif de référence connu à l'émission et à la réception**

Une méthode simple qui utilise un motif de référence est décrite dans le brevet FR 2.792.797. Dans cette invention, un motif de référence appelé cotatouage est ajouté à l'image. A la réception, la recherche du maximum de l'autocorrélation entre l'image reçue et le motif de référence permet de déterminer les coordonnées de l'origine de l'image initiale. Cette méthode est résistante aux décalages, aux découpes et aux translations de l'image, c'est-à-dire à des déformations globales de l'image. Elle devient inefficace lorsque la transformation géométrique est plus compliquée, par exemple une rotation, un changement d'échelle ou zoom, une déformation de tapis, etc.

S.Pereira et T.Pun ont proposé dans le document intitulé « Fast Robust template matching for affine resistance image Watermarking », Proceedings of International Workshop on information, une méthode plus générale de cotatouage permettant de résister à des transformations affines de l'image. Cette méthode est toutefois limitée et ne permet de recaler l'image que pour des transformations géométriques affines.

Une autre méthode proposée par S.Voloshynovski, F.Deguillaume, T.Pun dans le document « Multibit digital Watermarking robust against non linear geometrical transformations » Proceedings of ICIP 01, permet de résister à des transformations plus complexes, globales et/ou locales. Un motif de référence est tatoué orthogonalement au message, qui lui consiste en un motif symétrique et périodique. Le décodage du tatouage et l'estimation de la transformation se font conjointement.

Deux tatouages sont insérés : le tatouage porteur de message w1 et un tatouage de référence w2 (cotatouage). Le tatouage porteur de message consiste en un bloc de taille Kx, Ky symétrisé et périodisé de façon à obtenir un bloc de la taille de l'image. L'estimation se fait dans le domaine de Fourier: le fait que w1 soit périodique implique la présence de pics régulièrement espacés dans le domaine de Fourier. Pour chaque bloc de l'image, on considère que la déformation locale peut être approximée par une transformation géométrique affine (combinaison de rotation, changement d'échelle non uniforme et translation). Au décodage, on recherche pour chaque bloc, la transformation affine qui minimise l'écart entre le tatouage de référence et l'image déformée, sous réserve que cette transformation soit plausible (on élimine par exemple les étirements trop importants). Cette méthode est efficace pour recaler les tatouages mais elle est complexe car elle nécessite une recherche exhaustive de paramètres pour chaque bloc de l'image. De plus, elle est fondée sur une approximation (une transformation locale non linéaire ne se réduit pas à une succession de transformations affines) et ne prend pas en compte les corrélations existant entre paramètres estimés pour des blocs voisins.

**2) le tatouage dans un espace invariant par transformation géométrique**

O'Ruanaidh et T.Pun dans la référence intitulée « Rotation, scale and translation invariant spread spectrum digital image watermarking » Signal Processing, vol 66 N° 3, p 303-317, proposent d'effectuer le tatouage dans un espace invariant par rotation, translation, mise à l'échelle, pour s'affranchir des transformations géométriques éventuellement réalisées sur l'image. Ceci est obtenu en tirant parti des propriétés de la transformée de Fourier-Mellin. L'avantage de cette méthode est de permettre la résistance aux transformations géométriques sans avoir besoin de synchronisation préalable. L'inconvénient est que les propriétés d'invariance ne sont plus respectées lorsqu'on remplace la translation circulaire par une découpe de l'image. De plus, cette méthode est complexe et coûteuse en temps de calcul et peut présenter des problèmes de calculs numériques. D'autre part, la densité d'information enfouie dans l'image varie fortement.

Le brevet EP A 0981113 décrit un procédé permettant d'estimer de manière globale les variations survenues dans un système. Un pattern est inséré dans le domaine Fourier-Mellin et on détermine la déformation globale, rotation ou translation.

## 3) Le tatouage dans un référentiel lié à l'image

Une autre solution consiste à choisir un référentiel lié à l'image pour l'enfouissement et la détection du tatouage. Lorsque la géométrie de l'image sera déformée, le référentiel sera modifié de la même façon et il sera alors possible de retrouver la marque sans avoir besoin d'une synchronisation extérieure.

La méthode décrite dans le document « Robust Watermarking based on the warping of predefined triangular patterns » de P.Bas, J.M Chassery et B.Macq, Proceedings of SPIE - janvier 2000, utilise un référentiel local lié à un ensemble de zones caractéristiques de l'image. Ces zones peuvent être en particulier définies par des points d'intérêt, tels que ceux obtenus par un détecteur de Harris décrit dans le document « A combined corner and edge detector » de C. Harris et M. Stephen, 4th Alvey Vision Conf, p.147-151 -1988.

## 4) L'insertion redondante du tatouage dans l'image.

## 5) La recherche exhaustive de toutes les transformations possibles.

L'idée de l'invention consiste notamment à estimer des déformations locales ou considérées comme locales introduites dans des données, telles que des images, de l'audio, de la vidéo etc., l'estimation pouvant être effectuée globalement ou localement.

L'invention concerne un procédé pour corriger des variations géométriques locales survenues dans un premier ensemble de données image Z, ledit premier ensemble Z résultant de la déformation par lesdites variations géométriques locales d'un second ensemble de données image lequel comporte un motif de référence X. Le procédé comporte les étapes suivantes:

- modéliser les variations géométriques locales par un modèle de Markov à l'aide d'une variable d'indices $J$, ladite variable étant apte à mettre en correspondance chaque donnée dudit premier ensemble avec une donnée dudit second ensemble,
- déterminer la valeur de la variable d'indices $J$ maximisant la probabilité $P(J/Z,X)$ de la variable d'indices $J$ conditionnellement audit premier ensemble de données image $Z$ et audit motif de référence $X$, ladite probabilité $P(J/Z,X)$ étant calculée récursivement pour chacun desdits indices,
- corriger les variations géométriques locales dans ledit premier ensemble de données à l'aide de ladite variable d'indices $J$ déterminée.

Avantageusement, il détermine globalement les variations géométriques locales.

Selon une variante, il détermine localement les variations géométriques locales.

Selon une caractéristique particulière de l'invention, le second ensemble étant tatoué avec un tatouage préalablement à sa déformation par les variations géométriques locales, la variable d'indices J déterminée est utilisée pour déduire une information sur le tatouage.

L'invention concerne également un dispositif permettant de déterminer des variations géométriques locales survenues dans un premier ensemble de données image $Z$, le premier ensemble résultant de la déformation par les variations géométriques locales d'un second ensemble de données lequel comporte un motif de référence $X$. Le dispositif comporte au moins un microprocesseur adapté à exécuter les étapes du procédé décrit ci-dessus.

L'invention présente notamment les avantages suivants :

• le taux de décodage correct du tatouage est grandement amélioré,
• une estimation optimale des transformations géométriques survenues sur les données support au cours de leur transmission, de leur stockage, etc. à partir du motif de synchronisation connu.
• Une complexité de l'estimation faible, comparée à un algorithme de recherche exhaustive.

D'autres caractéristiques et avantages de l'invention apparaîtront mieux à la lecture de la description qui suit, donnée à titre illustratif et nullement limitatif en regard des figures annexées qui représentent :

- la figure 1 un schéma bloc d'un exemple de lecteur de tatouage selon l'invention,
- la figure 2 un exemple de valeurs prises par la variable d'indice lors d'une transformation de jitter
- la figure 3 la variable d'indices lorsque le jitter est une chaîne de Markov,
- la figure 4 un exemple de motif de synchronisation,
- la figure 5 un schéma d'insertion du tatouage porteur de message et du tatouage de synchronisation,
- la figure 6 un schéma d'insertion du tatouage porteur de message et du tatouage de synchronisation,
- la figure 7 un modèle de canal à jitter et bruit tonal combiné,
- la figure 8 le bruit géométrique et tonal,
- la figure 9 un exemple d'algorithme de Viterbi,
- la figure 10 un autre exemple d'algorithme de Viterbi,

De manière à mieux faire comprendre le procédé selon l'invention, la description qui suit est donnée pour un type de données support particulier, les images fixes, sachant que le procédé s'applique généralement à tout type de données support :

- à une dimension, audio par exemple,
- à deux dimensions, image fixe par exemple,
- à trois dimensions, séquences d'images ou volumes 3D par exemple, etc.

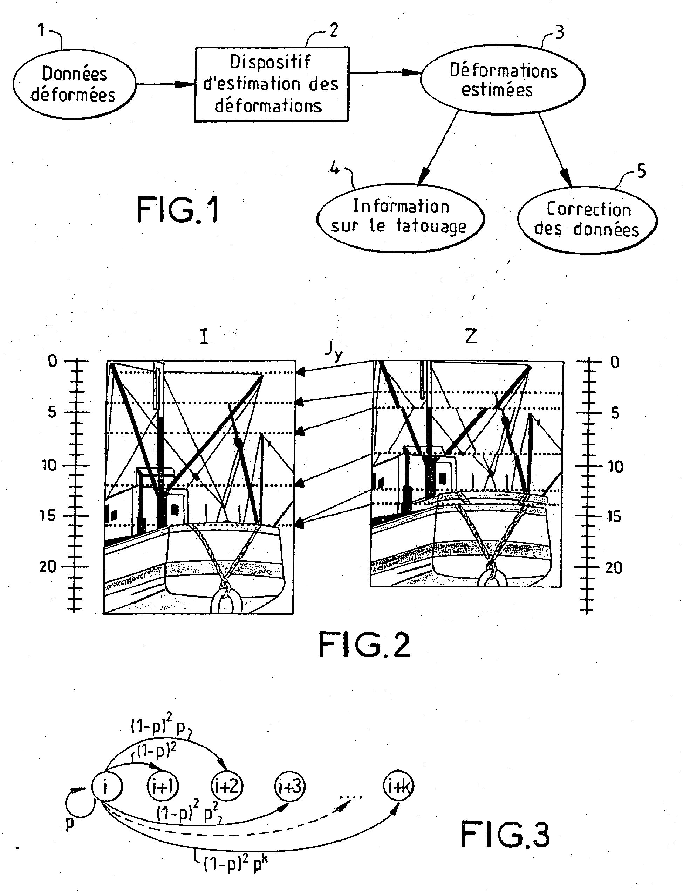

La figure 1 représente un schéma bloc d'un lecteur de tatouage selon l'invention. Les données déformées 1 sont reçues dans un lecteur de tatouage ou récepteur connu de l'Homme du métier. Ce dernier comprend un processeur 2 adapté pour estimer les déformations introduites dans les données, il est par exemple programmé pour mettre en oeuvre les étapes des différentes variantes du procédé décrit ci-après. Les déformations estimées 3 sont ensuite utilisées par exemple soit pour en déduire une information 4 sur le tatouage porteur de message lui-même, soit pour corriger 5 les déformations.

La figure 2 représente un exemple de valeurs prises par la variable d'indice (définie ci-après) caractérisant une déformation lors d'une transformation de jitter sur une image. L'image de gauche **I** correspond à l'image originale et l'image de droite **Z** à l'image déformée. Les flèches Jy traduisent les correspondances entre les différentes lignes des images.

Quelques définitions et notations utilisées dans la description sont aussi données :

➢ L'expression « données support » fait référence à des données dans lesquelles le tatouage est inséré, ces données peuvent être de type audio, vidéo, etc...

➢ Le terme « échantillon de signal » peut désigner alors un pixel, une ligne, une colonne d'une image, un échantillon de signal audio (cas de données audio), une image entière (cas de la vidéo, lorsque la transformation supprime ou dupplique des images de la séquence vidéo)

➢ Le mot « cotatouage » désigne le motif de référence connu par le lecteur de tatouage et utilisé par celui-ci pour estimer des caractéristiques inconnues de transformations effectuées sur l'image (déformations géométriques par exemple)

➢ Les variables scalaires sont notées en style normal et les variables vectorielles en gras :

- **I**: image originale (données support).

$I(x,y)$ représente la valeur du pixel d'abscisse x et d'ordonnée y.

- (n,k) : taille de I (n est la hauteur de l'image et k sa largeur)
- **X** : motif de cotatouage
- $I_w$ : image tatouée.
- **Z** : image éventuellement tatouée et éventuellement altérée reçue par le lecteur / détecteur de tatouage.
- (n',k') : taille de **Z** (n'est la hauteur de l'image et k' sa largeur)
- $Z_y$ dénote la ligne N° y de l'image **Z**
- **J** : variable d'indice modélisant la déformation géométrique subie par l'image. Cette variable permet de mettre en correspondance les échantillons de données déformées reçues par un récepteur avec ceux des données originales, il se présente par exemple sous la forme d'un champ vectoriel,
- La probabilité d'une variable Y est notée: P(Y)

- La probabilité jointe d'un ensemble de variables $Y_1 ... Y_q$ est notée $P(Y_1;...;Y_q)$
- La probabilité d'une variable $Y_1$ conditionnellement à une variable $Y_2$ est notée $P(Y_1/Y_2)$. La formule de Bayes donne la relation entre la probabilité conditionnelle et la probabilité jointe :

$$P(Y_1 / Y_2) = \frac{P(Y_1; Y_2)}{P(Y_2)}$$

- $\mathbf{Y}_{a,b}$ désigne le vecteur formé des composantes (a,a+1,...,b) du vecteur $\mathbf{Y}$
- $\underset{x}{\mathrm{Argmax}}[f(x)]$ désigne la valeur de x pour laquelle la valeur de f(x) est maximale.

De plus dans le cadre de la description, on généralise le modèle de Markov de la manière suivante : la donnée de la variable d'indice J (matrice de la taille de l'image) caractérise de façon unique toute transformation géométrique. Cependant, pour qu'une transformation géométrique soit réaliste, c'est-à-dire ne déforme pas trop l'image, J prend certaines valeurs uniquement. En particulier, les composantes de J doivent être corrélées, par exemple. Autrement dit, les valeurs J(x+dx, y+dy) pour des variations où dx et dy sont suffisamment « petits » dépendront directement de J(x,y), valeur prise par la variable d'indice en x,y. Par exemple, J(x+dx, y+dy) sera généralement proche de J(x, y) pour la plupart des modèles réalistes de transformations. Il existe un grand nombre de modèles permettant d'exprimer la corrélation locale entre composantes de J. Le modèle le plus simple, pour des données à 2 dimensions, est celui des champs de Markov. Dans ce modèle, la valeur J(x,y) dépend uniquement des valeurs de J dans un voisinage local, c'est-à-dire des valeurs de J(x+dx, y+dy) pour dx, dy petits. A une dimension, le modèle correspondant est celui des chaînes de Markov, où J(x+dx) ne dépend que de la valeur prise par J(x). C'est ce modèle qui est utilisé dans le procédé à titre illustratif et nullement limitatif pour décrire un exemple de réalisation du procédé selon l'invention.

Le modèle de Markov présente notamment comme avantage d'être puissant et de s'appliquer à un grand nombre de déformations. Notons que l'on distingue les chaînes/champs de Markov homogènes (où les lois de probabilité conditionnelles sont indépendantes de la position du pixel considéré), des chaînes/champs de Markov inhomogènes (où les lois conditionnelles varient spatialement). Cependant, il peut s'avérer utile de considérer des cas où les corrélations entré pixels sont étendues et plus complexes. Dans la description, l'expression « modèle à corrélation » est utilisée pour désigner tout modèle de déformation géométrique où les composantes de la variable d'indice sont localement ou globalement corrélées.

La figure 3 représente le graphe d'états associés avec les probabilités de transition entre états pour un modèle de Markov, dans le cas particulier où la transformation géométrique est un jitter, où la probabilité de suppression d'une ligne ou colonne ($p_{sup}$) et la probabilité d'insertion d'une ligne ou colonne ($p_{ins}$) sont égales ($p_{ins}=p_{sup}=p$).

### Description du motif de synchronisation ou cotatouage

Le motif de synchronisation dans le cas de l'image fixe est par exemple une matrice $\mathbf{X}$ de la taille de l'image $\mathbf{I}$.

Dans une réalisation particulière de l'invention, la matrice est obtenue par simulation d'une loi gaussienne de moyenne nulle et de variance $\sigma^2$, chaque élément de la matrice étant indépendant des autres éléments. La valeur numérique de $\sigma^2$ détermine la robustesse ainsi que la visibilité du procédé. Le motif de synchronisation $\mathbf{X}$ est ensuite tatoué dans l'image $\mathbf{I}$ pour obtenir l'image marquée $\mathbf{I}_w$.

Dans une réalisation particulière de l'invention, le motif est ajouté à l'image de la façon suivante $\mathbf{I}_w(x,y) = \mathbf{I}(x,y) + \mathbf{X}(x,y)$ pour toutes les coordonnées (x,y) des pixels de l'image.

Dans une autre réalisation de l'invention, le motif est additionné à l'image de façon adaptative afin d'augmenter la robustesse tout en diminuant la visibilité : $\mathbf{I}_w(x,y) = \mathbf{I}(x,y)+\gamma(x,y)*\mathbf{X}(x,y)$; $\gamma(x,y)$ étant un coefficient de pondération de la force du tatouage dépendant par exemple des caractéristiques locales de l'image (variance, texture ...) afin d'obtenir une meilleure invisibilité.

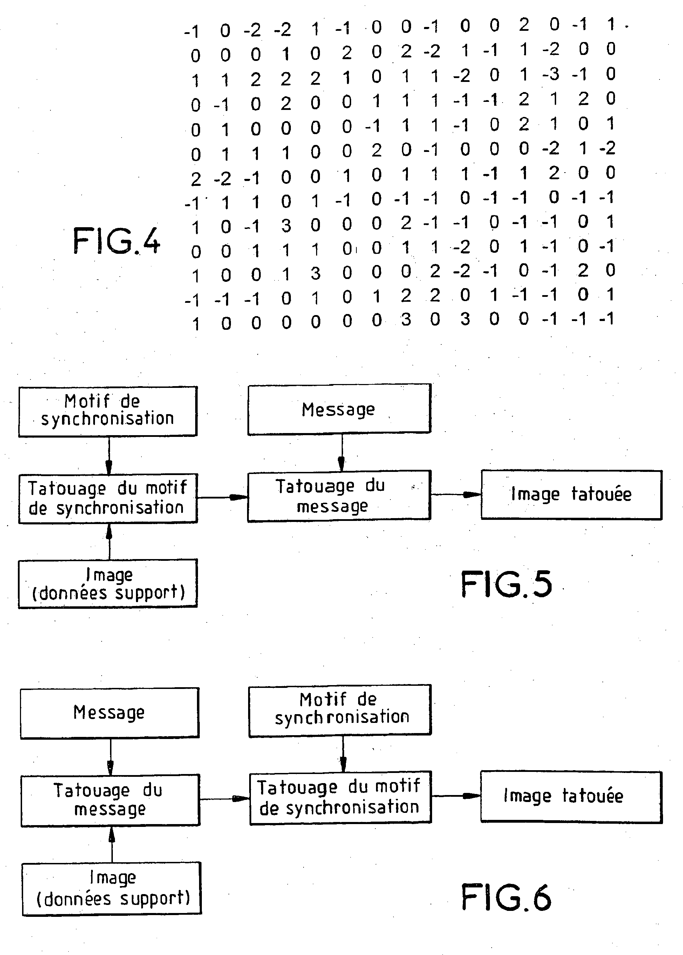

Le motif de synchronisation $\mathbf{X}(x,y)$ est de plus connu par l'appareil détectant et/ou décodant les tatouages. Un exemple de motif de cotatouage (motif de synchronisation) est donné en Figure 4. Dans cet exemple, chaque valeur est arrondie à l'entier le plus proche.

### Insertion du tatouage porteur

L'insertion du tatouage porteur de message est effectuée soit avant l'insertion du motif de synchronisation par exemple suivant les étapes données à la figure 5 soit après selon les étapes données à la figure 6.

A la figure 5 le motif de synchronisation 1 est tatoué avant le tatouage de message 2 pour donner l'image tatouée 3.

A la figure 6 le tatouage porteur de message est tatoué 4 avant le motif de synchronisation 5 pour donner l'image tatouée 8.

Toute technique de tatouage peut être utilisée pour introduire le message.

**Canal de tatouage**

Comme il a été mentionné précédemment, lors de l'exploitation, de la transmission ou encore du stockage de l'image (plus généralement des données reçues par un lecteur de tatouage), cette dernière peut subir des modifications.

Ces modifications peuvent être de nature tonale (la valeur des pixels est modifiée) et/ou géométrique (la géométrie de l'image est modifiée et la localisation des pixels diffère entre l'image originale et l'image modifiée). Les modifications opérées sur l'image dégradent généralement aussi le tatouage enfoui. Ces modifications sont en général aléatoires et inconnues lors de l'écriture du tatouage et l'ensemble de ces modifications est désigné sous le nom « canal de tatouage ».

Les déformations introduites sur l'image consistent par exemple en un jitter de lignes ou de colonnes, tel que décrit dans le document « Attacks on copyright marking systems » de F.Petitcolas, R.J. Anderson et M.G.Kuhn - 1998 - Proceedings of 2nd Information Hiding Workshop, combiné à un bruit tonal de variance notée $\sigma_b^2$. Ce bruit tonal, dans le cas d'une méthode additive de tatouage peut être par exemple provoqué par l'image elle-même qui est considérée comme un vecteur aléatoire.

Le jitter de lignes, respectivement de colonnes, duplique aléatoirement certaines lignes, respectivement certaines colonnes, de l'image. La probabilité de suppression d'une ligne est notée $p_{sup}$ et la probabilité d'insertion d'une ligne est notée $p_{ins}$.

**Modélisation du canal de tatouage avec déformations géométriques**

Les déformations et les transformations géométriques peuvent être modélisées en utilisant une variable aléatoire appelée « variable d'indice ». Dans le cas de l'image fixe, cette variable est un champ vectoriel à deux dimensions de la taille de l'image et notée $\mathbf{J}(x,y)=[J^x(x,y),J^y(x,y)]$.

Cette variable indique, pour chaque pixel en position $(x,y)$ de l'image modifiée $\mathbf{Z}$, la position $(x',y')$ du pixel correspondant dans l'image originale $\mathbf{I}$ où $x'=J^x(x,y)$ indique l'abscisse dans l'image originale et $y'=J^y(x,y)$ indique l'ordonnée.

Ceci est équivalent à la formule suivante: $Z(x,y) = I(J^x(x,y),J^y(x,y))$.

**Modélisation du canal de jitter**

Dans le cas du jitter de ligne, $J^x(x,y)$ est déterministe et égal à $x$ ; $J^y(x,y)$ est aléatoire et ne dépend que de $y$.

Dans le cas du jitter de colonne, $J^y(x,y)$ est déterministe et égal à $y$ ; $J^x(x,y)$ est aléatoire et ne dépend que de $x$.

Dans ce cas précis, seule une des composantes de la variable d'indice est aléatoire et c'est cette dernière composante qui est prise en compte par la suite. Les notations utilisées sont $J(x)$ ou $J_x$ (cas d'un jitter de colonnes) ou $J(y)$ ou $J_y$ (cas d'un jitter de lignes).

Afin de mieux faire comprendre le procédé selon l'invention les différentes étapes explicitées par la suite sont relatives au cas particulier du jitter de lignes. Le cas du jitter de colonnes est totalement symétrique, en remplaçant la variable $x$ par $y$.

On a pour le jitter de lignes: $Zy = I(J_y)$ c'est à dire que la ligne N° $y$ de l'image reçue $\mathbf{Z}$ correspond à la ligne N° $J_y$ de l'image originale $\mathbf{I}$.

On peut montrer dans le cas du jitter que $J(y)$ est une chaîne de Markov, selon une méthode décrite dans le document « A soft decoding algorithms for watermarks subject to a jitter attack » de S.Baudry, P.Nguyen et H.Maître » - juillet 2001 - Proceedings of SPIE, Image Security Technologies and Applications, volume 4472. Les probabilités de transition de cette chaîne de Markov dans le cas du jitter (voir Figure 3), sont données par:

- $P(J_y=i/J_{y-1}=i) = p_{ins}$      (duplication d'une ligne)
- $P(J_y=i/J_{y-1}=i-1) = (1-p_{ins})(1-p_{sup})$      (cas normal)
- $P(J_y=i/J_{y-1}=i-2) = (1-p_{ins})(1-p_{sup})p_{sup}$      (suppression d'une ligne)
- $P(J_y=i/J_{y-1}=i-3) = (1-p_{ins})(1-p_{sup})p_{sup}^2$      (suppression de 2 lignes)
- ....
- $P(J_y=i/J_{y-1}=i-j-1) = (1-p_{ins})(1-p_{sup})p_{sup}^j$      (suppression de $j$ lignes)
- Etc.

Le procédé de l'invention s'applique également pour d'autres valeurs des probabilités de transition. La variable d'indice doit de préférence respecter cette condition de "Markovianité" pour conduire à des résultats optimaux.

**Modélisation du canal combiné jitter + bruit additif**

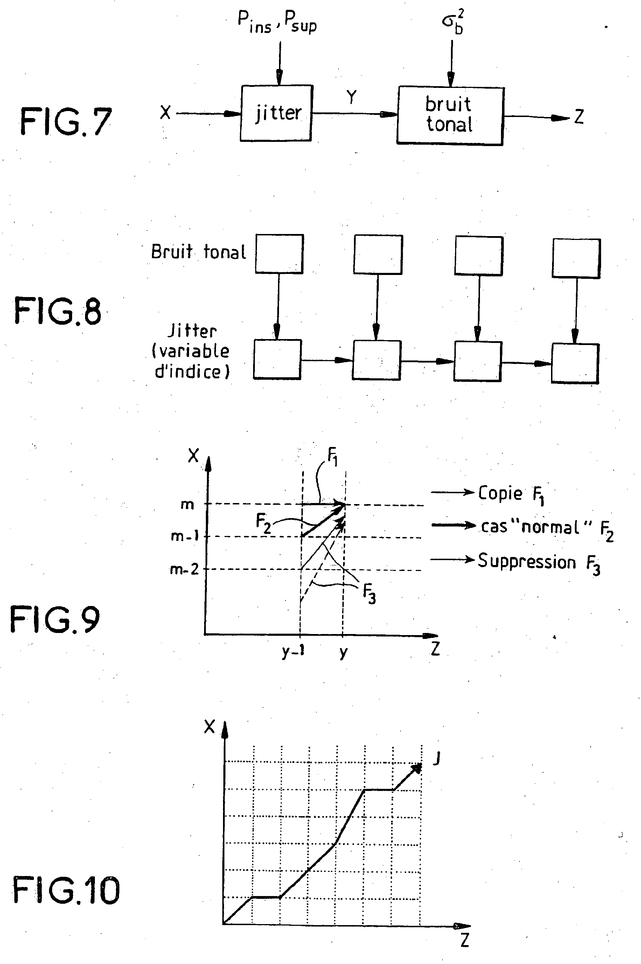

Le canal de tatouage est modélisé de façon réaliste par un canal combiné formé d'un jitter suivi d'un bruit tonal, selon la figure 7.

Dans l'exemple de réalisation particulière et non limitative décrite par la suite, le type de bruit tonal considéré est un bruit additif gaussien blanc de variance notée $\sigma_b^2$. Sans sortir du cadre de l'invention, d'autres types de bruit tonal peuvent être considérés (bruit substitutif par exemple). Le bruit tonal est blanc, c'est à dire que les valeurs prises par les échantillons du bruit tonal sont indépendantes alors que les valeurs de la variable d'indice sont corrélées. Cette condition est traduite à la figure 8 par la présence de liens ou flèches entre les représentations des variables d'indice (chaîne inférieure) et par l'absence de ces liens entre les valeurs prises par le bruit tonal.

Si $U_i$ est la valeur de l'échantillon N° i originel et $V_i$ la valeur de l'échantillon N° i bruité, la condition de bruit blanc s'exprime par :

$$P_{tonal}(V_i, V_j / U_i, U_j) = P_{tonal}(V_i / U_i) P_{tonal}(V_j / U_j)$$

On notera $P(Z_y/J_y=m)$ la probabilité liée au bruit tonal pour l'indice y. Plus précisément:

$$P(Z_y / J_y = m) = P_{tonal}(Z_y / X_m)$$

Dans le cas particulier où le bruit tonal est blanc et additif et suit une loi gaussienne de moyenne nulle et de variance $\sigma_b^2$ on a:

$$P_{tonal}(x) = \frac{1}{\sqrt{2\pi}\sigma_b} e^{-\frac{x^2}{2\sigma_b^2}}$$

et la probabilité d'avoir en sortie la valeur $V_k$ en position k sachant qu'on a la valeur $U_k$ en entrée en position k est

$$P(V_i / U_i) = P_{tonal}(V_i - U_i) = \frac{1}{\sqrt{2\pi}\sigma_b} e^{-\frac{(V_i - U_i)^2}{2\sigma_b^2}}$$

D'autre part, dans le cas du jitter, on doit calculer la contribution du bruit tonal sur une ligne entière de longueur k pixels. Dans le cas d'un bruit blanc identiquement distribué on a:

$$P_{tonal}(x) = \frac{1}{\sqrt{2\pi}\sigma_b} e^{-\frac{x^2}{2\sigma_b^2}}$$

et la probabilité d'avoir en sortie la valeur $V_k$ en position k sachant qu'on a la valeur $U_k$ en entrée en position k est

$$P(V_i / U_i) = P_{tonal}(V_i - U_i) = \frac{1}{\sqrt{2\pi}\sigma_b} e^{-\frac{(V_i - U_i)^2}{2\sigma_b^2}}$$

D'autre part, dans le cas du jitter, on doit calculer la contribution du bruit tonal sur une ligne entière de longueur k pixels. Dans le cas d'un bruit blanc identiquement distribué on a:

$$P(Z_y / J_y = m) = \prod_{i=1}^{i=k} P_{tonal}\left(Z(i,y) - X(i,J_y)\right) = \frac{1}{\left(\sqrt{2\pi}\sigma_b\right)^k} e^{-\frac{\sum_{i=1}^{i=k}(Z(i,y) - X(i,J_y))^2}{2\sigma_b^2}}$$

Après avoir introduit certaines conventions et hypothèses la suite de la description décrit les différentes mises en oeuvre par le procédé selon l'invention.

**Estimation des transformations géométriques**

Le lecteur de tatouage reçoit une image tatouée **Z** qui a éventuellement subi des déformations géométriques qui sont inconnues à la réception. A partir de cette image tatouée **Z**, le procédé consiste à déterminer les déformations éventuelles afin par exemple de détecter et/ou de décoder le tatouage présent.

Le décodage et/ou la détection se trouvent améliorés lorsque la transformation géométrique est partiellement ou totalement connue. Le but de l'invention est notamment de fournir un procédé permettant d'estimer de façon optimale la réalisation particulière du jitter survenue sur l'image, donc d'estimer la valeur prise par J(y) pour toutes les valeurs possibles de y (dans le cas d'un jitter de lignes). On notera **J** l'ensemble des valeurs J(y) pour tous les y.

Pour cela, le procédé met en oeuvre une méthode faisant appel par exemple à un modèle de Markov, ou plus généralement de type de Markov, comme il a été exposé ci-avant. L'idée est d'estimer, soit de façon globale la variable d'indice **J** (en tenant compte notamment des corrélations locales entre composantes de **J**), soit d'estimer chaque composante de **J** une par une. Deux variantes de réalisation sont exposées ci-après à titre illustratif et nullement limitatif: le premier procédé est nommé procédé forward - backward et le deuxième procédé Viterbi.

**Première variante de réalisation = Procédé forward - backward**

La variante du procédé dite « forward-backward » consiste notamment à rechercher pour chaque composante Jy de la variable d'indice **J**, la valeur qui est a posteriori la plus probable compte tenu de l'observation de l'image reçue **Z**, et de la conaissance du motif de cotatouage **X**, c'est-à-dire:

$$\hat{J}_y = \underset{m}{\text{Argmax}}\left(P(J_y = m / \mathbf{Z}; \mathbf{X})\right)$$

où $\hat{J}_y$ est l'estimation recherchée pour la ligne N° y de l'image déformée.

En appliquant la formule de Bayes, on obtient de façon équivalente :

$$\hat{J}_y = \underset{m}{\text{Argmax}}\left(P(J_y = m; \mathbf{Z} / \mathbf{X})\right) \quad \text{(équation fw.1)}$$

Pour simplifier l'écriture, la variable **X** n'est plus mentionnée dans les notations. Toutes les probabilités mentionnées doivent donc s'entendre conditionnellement à **X.**

Notations :

soit $\alpha_y(m)$ la quantité $\alpha_y(m) = P(Z_{1,y}; J_y = m)$

$\alpha_y(m)$ représente la probabilité d'observer les y premières lignes de l'image recue ($\mathbf{Z}_{1,y}$), et d'avoir la ligne N° y de l'image reçue correspondant à la ligne N° m de l'image originale,

Et $\beta_y(m)$ la quantité $\beta_y(m) = P(Z_{y+1,n'} / J_y = m)$.

$\beta_y(m)$ correspond à la probabilite d'observer les n'-y dernières lignes de l'image recue ($\mathbf{Z}_{y+1,n'}$), sous l'hypothèse que la ligne N°y de l'image reçue correspond à la ligne N° m de l'image originale.

**P**($J_y = m; \mathbf{Z}/\mathbf{X}$) s'exprime par exemple en fonction de $\alpha_y(m)$ et $\beta_y(m)$, en effet

$$P\big(J_y = m; \mathbf{Z} \,/\, \mathbf{X}\big) = P\big(J_y = m; \mathbf{Z}_{1;y}; \mathbf{Z}_{y+1;n'} \,/\, \mathbf{X}\big)$$
$$= P\big(\mathbf{Z}_{y+1;n'} \,/\, J_y = m; \mathbf{Z}_{1;y}; \mathbf{X}\big) P\big(J_y = m; \mathbf{Z}_{1;y} \,/\, \mathbf{X}\big) \qquad (\text{équation fw.2})$$
$$= P\big(\mathbf{Z}_{y+1;n'} \,/\, J_y = m; \mathbf{X}\big) P\big(J_y = m; \mathbf{Z}_{1;y} \,/\, \mathbf{X}\big)$$
$$= \alpha_y(m)\beta_y(m)$$

La première ligne d'équation est simplement un développement du terme recherché. La seconde ligne est obtenue à l'aide de la formule de Bayes. Dans la troisième ligne, le premier terme vient du fait que, puisque le bruit additif est blanc, la valeur observée pour les lignes y+1 à n' de l'image reçues dépend uniquement de la variable d'indice en y et de la valeur du tatouage original ; et est indépendante des valeurs prises par les lignes 1à y.

Dans le cas d'un modèle de Markov, il est possible de calculer de manière récursive $\alpha_y(m)$ et $\beta_y(m)$, ce qui rend le calcul moins complexe comparé à un calcul direct.

**Etape 1 = Calcul de $\alpha_y(m)$**

$\alpha_y(m)$ est initialisé de la façon suivante en y=1 (ligne N° 1 de l'image reçue), pour toutes les valeurs de m entre 1 et n (hauteur de l'image origine):

$$\alpha_1(m) = P(Z_1/J_1 = m)P(J_1 = m)$$

puis $\alpha_y(m)$ est calculé récursivement pour toutes les valeurs de y entre 2 et n' (hauteur de l'image reçue) et pour toutes les valeurs de m entre 1 et n.

$$\alpha_{y+1}(m) = P\big(\mathbf{Z}_{1,y+1}; J_{y+1} = m\big)$$
$$= P\big(Z_{y+1}; \mathbf{Z}_{1,y}; J_{y+1} = m\big)$$
$$= \sum_{j=0}^{j=m} P\big(Z_{y+1}; \mathbf{Z}_{1,y}; J_y = j; J_{y+1} = m\big)$$
$$= \sum_{j=0}^{j=m} P\big(Z_{y+1} \,/\, \mathbf{Z}_{1,y}; J_y = j; J_{y+1} = m\big) P\big(J_{y+1} = m \,/\, \mathbf{Z}_{1,y}; J_y = j\big) P\big(\mathbf{Z}_{1,y}; J_y = j\big)$$
$$= \sum_{j=0}^{j=m} P\big(Z_{y+1} \,/\, J_{y+1} = m\big) P\big(J_{y+1} = m \,/\, J_y = j\big) P\big(\mathbf{Z}_{1,y}; J_y = j\big)$$
$$= P(Z_{y+1}/J_{y+1} = m) \sum_{j=0}^{j=m} P(J_{y+1} = m \,/\, J_y = j)\alpha_y(j)$$

Etape 2 = Calcul de $\beta_y(m)$

$\beta_y(m)$ est initialisé à 1 en y=n' pour toutes les valeurs de m entre 1 et n. $\beta_y(m)$ est initialisé de la façon suivante en y=n'-1, pour toutes les valeurs de m entre 1 et n:

$$\beta_{n'-1}(m) = \sum_{j=m}^{j=n} P(Z_{n'}/J_{n'} = j)P(J_{n'} = j/J_{n'-1} = m)$$

puis $\beta_y(m)$ est calculé récursivement pour toutes les valeurs de y entre 1 et n'-2 et pour toutes les valeurs de m entre 1 et n.

$$\beta_y(m) = \sum_{j=m}^{j=n} P(Z_{y+1}/J_{y+1} = j)P(J_{y+1} = j/J_y = m)\beta_{y+1}(j)$$

$$\beta_{y-1}(m) = P\left(\mathbf{Z}_{y,n} / J_{y-1} = m\right)$$
$$= P\left(Z_y; \mathbf{Z}_{y+1,n} / J_{y-1} = m\right)$$
$$= \sum_{j=m}^{j=n} P\left(Z_y; \mathbf{Z}_{y+1,n}; J_y = j / J_{y-1} = m\right)$$
$$= \sum_{j=m}^{j=n} P\left(\mathbf{Z}_{y+1,n} / Z_y; J_y = j / J_{y-1} = m\right) P\left(Z_y / J_y = j; J_{y-1} = m\right) P\left(J_y = j / J_{y-1} = m\right)$$
$$= \sum_{j=m}^{j=n} P\left(\mathbf{Z}_{y+1,n} / J_y = j\right) P\left(Z_y / J_y = j\right) P\left(J_y = j / J_{y-1} = m\right)$$
$$= \sum_{j=m}^{j=n} \beta_y(m) P\left(Z_y / J_y = j\right) P\left(J_y = j / J_{y-1} = m\right)$$

**Etape 3 = Calcul final**

Le procédé calcule ensuite la quantité $\lambda_y(m)$ pour tous les y de 1 à n' et pour tous les m de 1 à n

$$\lambda_y(m) = \alpha_y(m)\beta_y(m)$$

En utilisant les équations fw1 et fw2 on obtient la valeur estimée de $J_y$ pour tous les y entre 1 et n' qui s'exprime par la relation

$$\hat{J}_y = \underset{m=1,\dots,n}{\mathrm{Argmax}}\left(\lambda_y(m)\right)$$

c'est à dire que l'on prend pour valeur de $J_y$ la valeur de m pour laquelle $\lambda_y(m)$ est maximale.

**Deuxième variante de réalisation = Procédé Viterbi**

La variante de mise en oeuvre du procédé dite « procédé Viterbi » correspond à rechercher la valeur de la variable d'indice **J** qui est globalement la plus probable compte tenu de l'observation de l'image reçue, c'est à dire :

$$\hat{\mathbf{J}} = \underset{\mathbf{K}}{\mathrm{Argmax}}\left(P(\mathbf{J} = \mathbf{K} / \mathbf{Z}; \mathbf{X})\right)$$

où $\hat{\mathbf{J}}$ est l'estimation recherchée pour l'ensemble des lignes de l'image déformée.
En appliquant la formule de Bayes, on obtient de façon équivalente :

$$\hat{\mathbf{J}} = \underset{\mathbf{K}}{\mathrm{Argmax}}\left(P(\mathbf{J} = \mathbf{K}; \mathbf{Z} / \mathbf{X})\right) \quad \text{(équation vit.1)}$$

Notons $V_y(m)$ la quantité (comme dans la description du procédé forward-backward, les probabilités doivent s'entendre ici conditionnellement à **X**)

$$V_y(m) = \underset{\mathbf{J}_{1,y-1}}{Max} P(\mathbf{Z}_{1,y}; J_y = m; \mathbf{J}_{1,y-1})$$

et le vecteur aléatoire associé $\Lambda_y(m)$, de probabilité $V_y(m)$ :

$$\Lambda_{y(m)} = \underset{J_{1,y-1}}{\text{ArgMax}} \, P(Z_{1,y}; J_y = m; J_{1,y-1})$$

La variable $P(\mathbf{Z}_{1,y}; J_y = m; \mathbf{J}_{1,y-1})$ correspond à la probabilité conjointe d'observer les y premières lignes de l'image reçue et d'avoir les y premières composantes de la variable d'indice qui prennent une certaine valeur (en particulier la ligne N° y de l'image reçue correspond à la ligne N° m de l'image d'origine).

$V_y(m)$ correspond à la valeur maximale prise par cette probabilité, lorsque l'on " essaie " toutes les valeurs a priori possibles pour $\mathbf{J}_{1,y-1}$.

$\Lambda_y(m)$ correspond alors à la valeur des y-1 premières composantes de la variable d'indice ($\mathbf{J}_{1,y-1}$) qui maximisent cette probabilité.

On peut exprimer l'équation vit.1 en fonction de $\Lambda_y(m)$ :

$$\underset{\mathbf{K}}{\text{Argmax}} \, (P(\mathbf{J} = \mathbf{K}; \mathbf{Z} / \mathbf{X})) = \underset{\mathbf{K}}{\text{Argmax}} \left( P\left( \mathbf{J}_{1;n'} = \mathbf{K}_{1,n'}; \mathbf{Z}_{1,n'} / \mathbf{X} \right) \right)$$

$$= \underset{\mathbf{K}}{\text{Argmax}} \left( P\left( \mathbf{J}_{1;n'-1} = \mathbf{K}_{1,n'-1}; J_{n'} = K_{n'}; \mathbf{Z}_{1,n'} / \mathbf{X} \right) \right)$$

$$= \underset{m}{\text{Argmax}} \left( \underset{\mathbf{K}_{1,n'-1}}{\text{Argmax}} \left( P\left( \mathbf{J}_{1;n'-1} = \mathbf{K}_{1,n'-1}; J_{n'} = m; \mathbf{Z}_{1,n'} / \mathbf{X} \right) \right) \right)$$

$$= \underset{m}{\text{Argmax}} \left( \Lambda_{n'(m)} \right)$$

$V_y(m)$ est initialisé en y=1 pour tous les m de 1 à n

$$V_1(m) = P(Z_1 / J_1 = m) P(J_1 = m)$$

Le procédé calcule de manière récursive par exemple, $V_y(m)$ pour tous les y de 2 à n' et pour tous les m de 1 à n de la façon suivante (voir Figure 9):

Sur la figure la flèche $F_1$ correspond à une copie, la flèche $F_2$ au cas « normal » et la flèche $F_3$ à une suppression. On obtient alors $\Lambda_y(m)$ comme le vecteur associé.

La valeur estimée de J est alors donnée en n par

$$J_{n'} = \underset{m=1,\dots,n}{\text{Argmax}} \, (V_{n'}(m))$$

c'est à dire que l'on prend pour valeur de $J_{n'}$ la valeur de m pour laquelle $V_{n'}(m)$ est maximale.

Les autres valeurs de $J_y$ (y<n') sont calculées à partir de $J_{n'}$ en «rebroussant chemin» de la manière suivante (figure 10):

$$J_y = \Lambda_y (J_{y+1})$$

Une fois les valeurs estimées des variables d'indices correspondant à des déformations introduites dans l'image originale, le procédé les utilise par exemple pour obtenir par exemple l'image rectifiée désignée par **Z'**.

### Inversion de la transformation de jitter

Le procédé utilise la variable d'indices estimée J afin d'inverser la transformation de jitter sur l'image **Z**, pour obtenir l'image rectifiée **Z'**.

Comme la transformation de jitter n'est pas strictement inversible, puisque certaines lignes ou colonnes de l'image sont supprimées, donc définitivement perdues, plusieurs procédés sont possibles pour inverser le jitter.
Un des procédés possible est le suivant:

➢ soit j l'ordonnée d'une ligne de l'image originale.
➢ soit {a1....am} l'ensemble de toutes les composantes de la variable d'indice **J** telles que:

$$\forall i \in \{1 \cdots m\} \quad J_{a_i} = j$$

On obtient la ligne N° j de **Z'** de la façon suivante:

➢ Si m≥ 1, la ligne N° j de **Z'** est obtenue en faisant la moyenne des lignes N°{$J_{a1}$...$J_{am}$} de l'image reçue **Z.**
➢ Si m=0 (la ligne N° j a été supprimée par le jitter), on obtient la ligne N° j de **Z'** par interpolation entre la ligne N° j-1 et N° j+1 de **Z'.**

Une autre solution consiste à adapter le module de lecture du tatouage porteur en fonction de la valeur estimée du jitter. Par exemple, si la ligne N° j de l'image originale a été supprimée, l'information de suppression est fournie au détecteur afin que celui ci n'en tienne pas compte dans l'estimation du tatouage (décodage souple).
Sans sortir du cadre de l'invention les étapes décrites ci-dessus s'appliquent pour estimer les déformations locales introduites dans des données audio au cours de leur transmission ou de leur stockage.
Par exemple le procédé et le dispositif selon l'invention s'applique par exemple dans les domaines suivants :

• Tatouage :

  • Applications de gestion des droits d'auteurs : contrôle automatique de diffusion, traçage d'utilisation de contenu (fingerprint), protection contre les copies sauvages (DVD notamment),
  • Applications de sécurité : authentification de la source des données, protection de données confidentielles,
  • Applications méta-données : le tatouage permet d'insérer dans l'oeuvre une étiquette persistante. Cette technique peut être utilisée pour l'audimétrie, la gestion de contribution dans les studio de télévision ou en post-production, l'indexation et la gestion de bases de données hétérogènes, la transmission de données annexes (sous-titres...) compatible avec tous les standards TV etc.,

• Communications

  • L'invention peut être utilisée dans le domaine des communications numériques, lorsque l'on cherche à s'affranchir d'un jitter de phase afin de diminuer le taux d'erreur en réception,

• Restauration d'image

  • L'invention peut être utilisée pour compenser les déformations géométriques sur une image, dans une application autre que le tatouage (archivage d'images et de vidéo au format analogique ...).

**Revendications**

**1.** Procédé pour corriger des variations géométriques locales survenues dans un premier ensemble de données image **Z**, ledit premier ensemble **Z** résultant de la déformation par lesdites variations géométriques locales d'un second ensemble de données image lequel comporte un motif de référence **X**, **caractérisé en ce qu'**il comporte les étapes suivantes:

  - modéliser les variations géométriques locales par un modèle de Markov à l'aide d'une variable d'indices **J**, ladite variable étant apte à mettre en correspondance chaque donnée dudit premier ensemble avec une donnée dudit second ensemble,
  - déterminer la valeur de la variable d'indices **J** maximisant la probabilité P(J/Z,X) de la variable d'indices **J** conditionnellement audit premier ensemble de données image **Z** et audit motif de référence **X**, ladite probabilité P(J/Z,X) étant calculée récursivement pour chacun desdits indices,

- corriger les variations géométriques locales dans ledit premier ensemble de données à l'aide de ladite variable d'indices J déterminée.

**2.** Procédé selon la revendication 1 **caractérisé en ce qu'**il détermine globalement les variations géométriques locales.

**3.** Procédé selon la revendication 1 **caractérisé en ce qu'**il détermine localement les variations géométriques locales.

**4.** Procédé selon l'une des revendications 1 à 3 **caractérisé en ce que**, ledit second ensemble étant tatoué avec un tatouage préalablement à sa déformation par lesdites variations géométriques locales, la variable d'indices J déterminée est utilisée pour déduire une information sur ledit tatouage.

**5.** Dispositif permettant de déterminer des variations géométriques locales survenues dans un premier ensemble de données image **Z**, ledit premier ensemble résultant de la déformation par lesdites variations géométriques locales d'un second ensemble de données lequel comporte un motif de référence **X**, **caractérisé en ce qu'**il comporte au moins un microprocesseur adapté à exécuter les étapes du procédé selon l'une des revendications 1 à 4.

**Patentansprüche**

**1.** Verfahren zum Korrigieren örtlich begrenzter geometrischer Änderungen, die in einer ersten Gesamtheit an Bilddaten **Z** aufgetreten sind, wobei sich die erste Gesamtheit **Z** aus der Verformung einer zweiten Gesamtheit an Bilddaten, welche ein Bezugsmotiv **X** aufweist, durch die örtlich begrenzten geometrischen Änderungen ergibt, **dadurch gekennzeichnet, dass** es die folgenden Schritte aufweist:

- Modellieren der örtlich begrenzten geometrischen Änderungen durch eine Markov-Kette mit Hilfe einer Indizes-Variable **J**, wobei diese Variable dazu geeignet ist, jede Dateneinheit der ersten Gesamtheit mit einer Dateneinheit der zweiten Gesamtheit in Beziehung zu setzen,
- Bestimmen des Wertes der Indizes-Variable **J**, indem der größtmögliche Wert der Wahrscheinlichkeit P(J/Z,X) der Indizes-Variable **J** in Abhängigkeit von der ersten Gesamtheit an Bilddaten **Z** und vom Bezugsmotiv **X** angestrebt wird, wobei die Wahrscheinlichkeit P(J/Z,X) für jeden der Indizes rekursiv berechnet wird
- Korrigieren der örtlich begrenzten geometrischen Änderungen in der ersten Gesamtheit an Daten mit Hilfe der bestimmten Indizes-Variable **J**.

**2.** Verfahren nach Anspruch 1, **dadurch gekennzeichnet, dass** es die örtlich begrenzten geometrischen Änderungen auf globale Weise bestimmt.

**3.** Verfahren nach Anspruch 1, **dadurch gekennzeichnet, dass** es die örtlich begrenzten geometrischen Änderungen auf örtliche begrenzte Weise bestimmt.

**4.** Verfahren nach einem der Ansprüche 1 bis 3, **dadurch gekennzeichnet, dass** die zweite Gesamtheit mit einem digitalen Wasserzeichen versehen wird, bevor sie durch die örtlich begrenzten geometrischen Änderungen verformt wird, wobei die bestimmte Indizes-Variable J dazu verwendet wird, eine Information aus dem Wasserzeichen abzuleiten.

**5.** Vorrichtung zur Bestimmung örtlich begrenzter geometrischer Veränderungen, die in einer ersten Gesamtheit an Bilddaten **Z** aufgetreten sind, wobei sich die erste Gesamtheit aus der Verformung einer zweiten Gesamtheit an Bilddaten, welche ein Bezugsmotiv **X** aufweist, durch die örtlich begrenzten geometrischen Veränderungen ergibt, **dadurch gekennzeichnet, dass** sie mindestens einen Mikroprozessor aufweist, der dazu geeignet ist, die Schritte des Verfahrens nach einem der Ansprüche 1 bis 4 auszuführen.

**Claims**

**1.** Method for correcting local geometrical variations that have occurred in a first set of image data **Z**, said first set **Z** resulting from the distortion by said local geometrical variations of a second set of image data which comprises a reference pattern **X**, **characterised in that** it comprises the following steps:

- modelling the local geometrical variations by means of a Markov model using an index variable **J**, said variable being able to match each item of data from said first set with an item of data from said second set,
- determining the value of the index variable **J** maximising the conditional probability P(J/Z,X) of the index variable **J** given said first set of image data **Z** and given said reference pattern **X**, said probability P(J/Z,X) being calculated recursively for each of said indices,
- correcting the local geometrical variations in said first set of data using said determined index variable **J**.

2. Method according to claim 1 **characterised in that** it globally determines the local geometrical variations.

3. Method according to claim 1 **characterised in that** it locally determines the local geometrical variations.

4. Method according to one of claims 1 to 3 **characterised in that**, said second set being watermarked with a watermark prior to its distortion by said local geometrical variations, the determined index variable J is used to deduce an item of information on said watermark.

5. Method making it possible to determine the local geometrical variations that have occurred in a first set of image data **Z**, said first set resulting from the distortion by said local geometrical variations of a second set of data which comprises a reference pattern **X**, **characterised in that** it comprises at least one microprocessor adapted to executing the steps of the method according to one of claims 1 to 4.

FIG.1

FIG.2

FIG.3

```
-1   0  -2  -2   1  -1   0   0  -1   0   0   2   0  -1   1.
 0   0   0   1   0   2   0   2  -2   1  -1   1  -2   0   0
 1   1   2   2   2   1   0   1   1  -2   0   1  -3  -1   0
 0  -1   0   2   0   0   1   1   1  -1  -1   2   1   2   0
 0   1   0   0   0   0  -1   1   1  -1   0   2   1   0   1
 0   1   1   1   0   0   2   0  -1   0   0   0  -2   1  -2
 2  -2  -1   0   0   1   0   1   1   1  -1   1   2   0   0
-1   1   1   0   1  -1   0  -1  -1   0  -1  -1   0  -1  -1
 1   0  -1   3   0   0   0   2  -1  -1   0  -1  -1   0   1
 0   0   1   1   1   0   0   1   1  -2   0   1  -1   0  -1
 1   0   0   1   3   0   0   0   2  -2  -1   0  -1   2   0
-1  -1  -1   0   1   0   1   2   2   0   1  -1  -1   0   1
 1   0   0   0   0   0   0   3   0   3   0   0  -1  -1  -1
```

**FIG.4**

| Motif de synchronisation |
|---|

↓

| Message |
|---|

↓

| Tatouage du motif de synchronisation | → | Tatouage du message | → | Image tatouée |

↑

| Image (données support) |
|---|

**FIG.5**

| Message |
|---|

↓

| Motif de synchronisation |
|---|

↓

| Tatouage du message | → | Tatouage du motif de synchronisation | → | Image tatouée |

↑

| Image (données support) |
|---|

**FIG.6**

**FIG.7**

$$P_{ins}, P_{sup} \qquad \sigma_b^2$$

X → | jitter | —Y→ | bruit tonal | → Z

**FIG.8**

Bruit tonal

Jitter
(variable
d'indice)

**FIG.9**

X

$F_1$

m

$F_2$

m-1

m-2

$F_3$

y-1    y    Z

→ Copie $F_1$

→ cas "normal" $F_2$

→ Suppression $F_3$

**FIG.10**

X

J

Z

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0981113 A

- FR 2792797


**Littérature non-brevet citée dans la description**

- **O'RUANAIDH ; T.PUN.** Rotation, scale and translation invariant spread spectrum digital image watermarking. *Signal Processing,* vol. 66 (3), 303-317
- **P.BAS ; J.M CHASSERY ; B.MACQ.** Robust Watermarking based on the warping of predefined triangular patterns. *Proceedings of SPIE,* Janvier 2000

- **C. HARRIS ; M. STEPHEN.** A combined corner and edge detector. *4th Alvey Vision Conf,* 1988, 147-151
- **S.BAUDRY ; P.NGUYEN ; H.MAÎTRE.** A soft decoding algorithms for watermarks subject to a jitter attack. *Proceedings of SPIE, Image Security Technologies and Applications,* Juillet 2001, vol. 4472